# EUROPEAN PATENT APPLICATION

(11) **EP 4 641 130 A1**
(43) Date of publication of application: **29.10.2025**
(21) Application number: 25731162.1
(22) Date of filing: 07.01.2025
(51) Int. Cl.: G01B 11/02

(54) **DEVICE FOR MEASURING BACK ENGAGEMENT OF SLITTING KNIFE**

(30) Priority: 31.10.2024 CN 202422658035 U
(71) Applicant: Eve Power Co., Ltd., Jingmen, Hubei 448000 (CN)
(72) Inventor: LIU, Tao, Jingmen, Hubei 448000 (CN); CHEN, Nian, Jingmen, Hubei 448000 (CN); BAI, Chengdong, Jingmen, Hubei 448000 (CN); WEI, Liming, Jingmen, Hubei 448000 (CN)
(74) Representative: HGF
(86) International application number: PCT/CN2025/071016
(87) International publication number: WO 2025/124609

(57) **Abstract**

This application provides a detection device for a knife clearance of a slitting knife. The device includes a support unit and a detection unit. A knife holder of the slitting knife is disposed on the support unit. The detection unit is connected to the support unit. The detection unit includes a charge-coupled device (CCD) sensor assembly. The CCD sensor assembly faces the slitting knife. The CCD sensor assembly is configured to detect the knife clearance of the slitting knife. Compared with the manual visual method for determining the knife clearance, using the CCD sensor assembly to detect the knife clearance of the slitting knife can improve the detection efficiency and the detection precision, thereby ensuring the product quality.

## Description

This application claims priority to Chinese Patent Application No. 202422658035.6 filed with the China National Intellectual Property Administration (CNIPA) on Oct. 31, 2024, the disclosure of which is incorporated herein by reference in its entirety.

### TECHNICAL FIELD

This application relates to the field of mechanical detection technologies, specifically a detection device for a knife clearance of a slitting knife.

### BACKGROUND

In a battery production process, slitting knives are used to cut pole species.

### TECHNICAL PROBLEM

A slitting knife has a sharp blade whose edge is fragile and prone to damage. Currently, there is no suitable method to detect a knife clearance. Generally an experienced operator adjusts a knife clearance after visual inspection. This method is not only inefficient but also lacks controllable detection accuracy, affecting the product quality.

### SUMMARY

### TECHNICAL SOLUTION

An embodiment of this application provides a detection device for a knife clearance of a slitting knife. The device includes a support unit and a detection unit.

A knife holder of the slitting knife is disposed on the support unit supports.

The detection unit is connected to the support unit. The detection unit includes a CCD sensor assembly. The CCD sensor assembly faces the slitting knife to detect the knife clearance of the slitting knife.

Optionally, multiple slitting knives are disposed on a knife shaft along a first direction. The detection unit is movably connected to the support unit along the first direction so that the CCD sensor assembly is movable relative to the support unit along the first direction.

Optionally, the detection unit also includes a slide rail and a slide block. The slide rail is disposed on the support unit and extends along the first direction. The slide block is slidably fitted with the slide rail. The CCD sensor assembly is connected to the slide block.

Optionally, the detection unit also includes a clamping member. The clamping member is connected to the slide block and cooperates with the slide rail.

Optionally, the CCD sensor assembly includes a light-emitting-end sensor and a light-receiving-end sensor opposite to each other along a second direction. The detection unit also includes a bracket. The light-emitting-end sensor and the light-receiving-end sensor are movably connected to the bracket along a third direction. The bracket is connected to the slide block.

Optionally, the bracket includes a first support plate and two second support plates. The first support plate extends along the second direction. The two second support plates extend along the third direction. The first support plate is connected to the slide block. The two second support plates are movably connected to the first support plate along the second direction. The light-emitting-end sensor is movably connected to one second support plate along the third direction. The light-receiving-end sensor is movably connected to the other second support plate along the third direction.

Optionally, the support unit includes a support table and a support wheel. The support table is provided with an avoidance hole. The support wheel is disposed at the avoidance hole. The support wheel protrudes from the surface of the support table. The knife holder is movable to a detection position on the support table. The rolling direction of the support wheel cooperates with the moving direction of the knife holder.

Optionally, the support unit also includes a guide roller. The rotary shaft of the guide roller is connected to the support table. The guide roller is in rollable contact with the side wall of the knife holder. The rolling direction of the guide roller cooperates with the moving direction of the knife holder. Moreover/alternatively, the support unit also includes a stop block. The stop block protrudes from the support table and is configured to stop the knife holder from leaving the support table.

Optionally, two sets of guide rollers are provided. Multiple guide rollers in each set of guide rollers are sequentially arranged at intervals along the moving direction of the knife holder. The two sets of guide rollers are disposed on two sides of the knife holder along the moving direction of the knife holder.

Optionally, the support unit also includes a trolley. The support table is disposed on the trolley.

### BENEFICIAL EFFECTS

The beneficial effects of the application are as follows. This application provides a detection device for a knife clearance of a slitting knife. The device includes a support unit and a detection unit. The knife holder of the slitting knife is disposed on the support unit. The detection unit is connected to the support unit. The detection unit includes a CCD sensor assembly. The CCD sensor assembly faces the slitting knife. The CCD sensor assembly is configured to detect the knife clearance of the slitting knife. Compared with the manual visual inspection method for determining the knife clearance, using the CCD sensor assembly to detect the knife clearance of the slitting knife can improve the detection efficiency and the detection precision, thereby ensuring the product quality.

### BRIEF DESCRIPTION OF THE DRAWINGS

FIG. 1 is a diagram illustrating the structure of a detection device (including a knife holder, a knife shaft, and slitting knives) for a knife clearance of a slitting knife according to an embodiment of this application.
FIG. 2 is a diagram illustrating the structure of a detection device (not including a knife holder, a knife shaft, and slitting knives) for a knife clearance of a slitting knife according to an embodiment of this application.
FIG. 3 is a diagram illustrating the structure of a detection device (not including a knife holder, a knife shaft, and slitting knives) for a knife clearance of a slitting knife according to an embodiment of this application.
FIG. 4 is a diagram illustrating the structure of a detection device (not including a support table) for a knife clearance of a slitting knife according to an embodiment of this application.

### Reference list

1. support unit; 11. support table; 12. support wheel; 13. guide roller; 14. trolley; 141. trolley frame; 142. wheel; 143. handrail; 15. stop block;
3. detection unit; 31. slide rail; 32. slide block; 33. clamping member; 34. light-emitting-end sensor; 35. light-receiving-end sensor; 36. first support plate; 37. second support plate;
700. knife holder; 800. knife shaft; 900. slitting knife

### DETAILED DESCRIPTION

In a battery production process, slitting knives are used to cut pole species. A slitting knife has a sharp blade whose edge is fragile and prone to damage. Currently, there is no suitable method to detect a knife clearance. Generally an experienced operator adjusts a knife clearance after visual inspection. This method is not only inefficient but also lacks controllable detection precision, adversely affecting the product quality.

Therefore, an embodiment provides a detection device for a knife clearance of a slitting knife to improve the detection efficiency and the detection precision, thereby ensuring the product quality. The detection device includes a knife holder 700, a knife shaft 800, and slitting knives 900. Two parallel knife shafts 800 are arranged in the knife holder 700. Each knife shaft 800 is provided with slitting knives 900. The detection device can detect the gap between a set of slitting knives 900 on the two knife shafts 800.

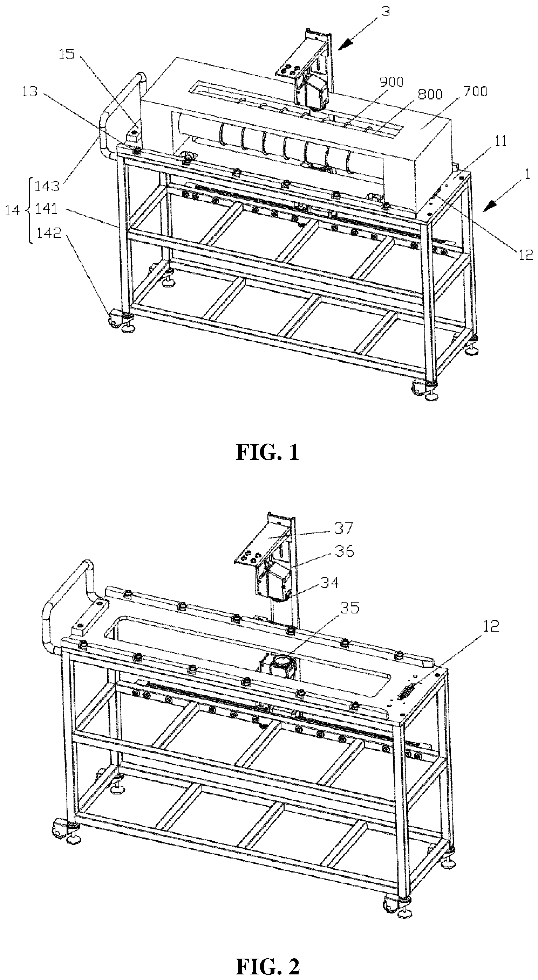

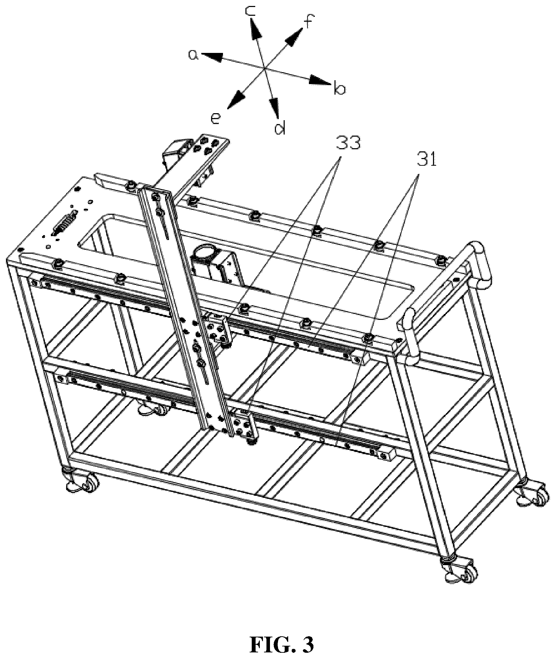

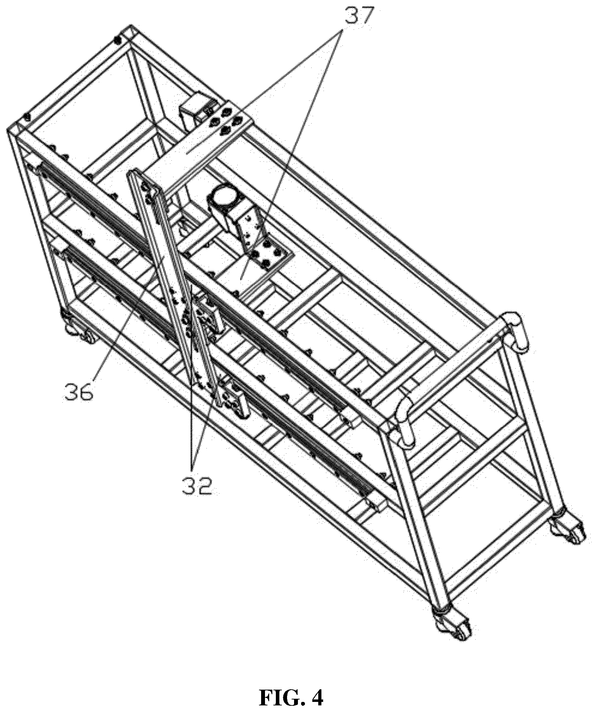

As shown in FIGS. 1 to 4, the detection device for a knife clearance of a slitting knife includes a support unit 1 and a detection unit 3. In FIG. 3, the ab direction is a first direction, the cd direction is a second direction, and the ef direction is a third direction. A knife holder 700 of the slitting knives 900 is disposed on the support unit 1. The detection unit 3 is connected to the support unit 1. The detection unit 3 includes a charge-coupled device (CCD) sensor assembly. The CCD sensor assembly faces the slitting knifes 900. The CCD sensor assembly is configured to detect the knife clearance of the slitting knife. The CCD sensor assembly can detect and calculate the projection of the gap between the two slitting knives 900 in a set of slitting knives 900 to obtain the exact value of the spacing (that is, the knife clearance) between the two slitting knives 900.

Compared with the manual visual inspection method for determining the knife clearance, using the CCD sensor assembly to detect the knife clearance of the slitting knife 900 can improve the detection efficiency and the detection precision, thereby ensuring the product quality.

Optionally, multiple slitting knives 900 are disposed on a knife shaft 800 along the first direction. The detection unit 3 is movably connected to the support unit 1 along the first direction so that the CCD sensor assembly is movable relative to the support unit 1 along the first direction. That is, after detecting the knife clearance of one set of slitting knives 900, the CCD sensor assembly can move along the first direction to reach the next set of slitting knives 900. After a series of detection and movement operations, the knife clearance detection of multiple sets of slitting knives 900 on the two knife shafts 800 can be completed.

To enable the CCD sensor assembly to move along the first direction, optionally, the detection unit 3 also includes slide rails 31 and slide blocks 32. The slide rails 31 are disposed on the support unit 1 and extend along the first direction. The slide blocks 32 are slidably fitted with the slide rails 31. The CCD sensor assembly is connected to the slide blocks 32. That is, the slide blocks 32 can drive the CCD sensor assembly to move along the extension direction (the first direction) of the slide rails 31. To improve the stability of movement, in this embodiment, two slide rails 31 and two slide blocks 32 are provided. The two slide blocks 32 move on the slide rails 31.

Optionally, the detection unit 3 also includes clamping members 33. The clamping members 33 are connected to the slide blocks 32 and cooperate with the slide rails 31. After the slide blocks 32 drive the CCD sensor assembly to move along the first direction to a proper position aligned with one group of slitting knives 900, the clamping members 33 can quickly lock the position of the CCD sensor assembly to ensure that the CCD sensor assembly remains stable during the subsequent imaging and detection process.

Optionally, the CCD sensor assembly includes a light-emitting-end sensor 34 and a light-receiving-end sensor 35 opposite to each other along the second direction. The light-emitting-end sensor 34 and the light-receiving-end sensor 35 are located on two sides of the slitting knife 900 with respect to the second direction. The detection unit 3 also includes a bracket. The light-emitting-end sensor 34 and the light-receiving-end sensor 35 are movably connected to the bracket along the third direction. The bracket is connected to the slide block 32.

Optionally, the bracket includes a first support plate 36 and two second support plates 37. The first support plate 36 extends along the second direction. The two second support plates 37 extend along the third direction. The first support plate 36 is connected to the slide block 32. The two second support plates 37 are movably connected to the first support plate 36 along the second direction. The light-emitting-end sensor 34 is movably connected to one second support plate 37 along the third direction. The light-receiving-end sensor 35 is movably connected to the other second support plate 37 along the third direction.

Optionally, the first support plate 36 is provided with an assembly hole extending along the second direction, a second support plate 37 is secured to the first support plate 36 through the cooperation between an assembly part and the assembly hole of the first support plate 36, and the assembly part can move along the second direction. Optionally, a second support plate 37 is provided with an assembly hole extending along the third direction, the light-emitting-end sensor 34 is secured to the second support plate 37 through the cooperation between an assembly part and the assembly hole of the second support plate 37, and the light-receiving-end sensor 35 is secured to another second support plate 37 through the cooperation between an assembly part and the assembly hole of the another second support plate 37. The two assembly parts can move along the third direction.

Optionally, the first direction and the third direction are horizontal, and the second direction is vertical. The first direction is perpendicular to the third direction. With the movable-fit structural design, the light-emitting-end sensor 34 and the light-receiving-end sensor 35 are opposite to each other in the vertical direction. The distance between the light-emitting-end sensor 34 and the light-receiving-end sensor 35 is adjustable. The relative positions of the light-emitting-end sensor 34 and the light-receiving-end sensor 35 in the horizontal direction are also adjustable such that their optical axes are aligned.

Optionally, the support unit 1 includes a support table 11 and a support wheel 12. The support table 11 is provided with a avoidance hole. The support wheel 12 is disposed at the avoidance hole. The wheel shaft of the support wheel 12 is connected to the support table 11. The support wheel 12 protrudes from the surface of the support table 11. The knife holder 700 is movable to a detection position on the support table 11. The rolling direction of the support wheel 12 cooperates with the moving direction of the knife holder 700. The support wheel 12 facilitates the movement of the knife holder 700 by reducing the sliding friction, thereby saving both effort and time.

Optionally, the support unit 1 also includes a stop block 15. The stop block 15 protrudes from the support table 11 and is configured to stop the knife holder 700 from leaving the support table 11. Optionally, the knife holder 700 moves horizontally along the first direction from a first end of the support table 11 onto the support table 11. The stop block 15 is disposed at a second end of the support table 11. The first end and the second end are opposite to each other along the first direction. The stop block 15 can prevent the knife holder 700 from moving beyond the placement position of the knife holder 700 and thus from falling off from the second end. Optionally, the support wheel 12 is disposed at a position adjacent to the first end of the support table 11.

Optionally, the support unit 1 also includes a guide roller 13. The rotary shaft of the guide roller 13 is connected to the support table 11. The guide roller 13 is in rollable contact with the side wall of the knife holder 700. The rolling direction of the guide roller 13 cooperates with the moving direction of the knife holder 700. Optionally, two sets of guide rollers 13 are provided. Multiple guide rollers 13 in each set of guide rollers 13 are sequentially arranged at intervals along the moving direction of the knife holder 700. The two sets of guide rollers 13 are disposed on two sides of the knife holder 700 to guide the movement of the knife holder 700.. Optionally, anti-drop protruding strips are also disposed on two sides of the support table 11 where the guide rollers 13 are disposed, to prevent the knife holder 700 from disengaging sideways from the support table 11.

Optionally, the support unit 1 also includes a trolley 14. The support table 11 is disposed on the trolley 14. The trolley 14 includes a trolley frame 141, wheels 142, and a handrail 143 to facilitate movement of the detection device for a knife clearance of a slitting knife. Optionally, four wheels 142 are disposed at the four bottom corners of the trolley, and each wheel 142 is provided with a caster cup. Optionally, the support table 11 is disposed on the top surface of the trolley 14, and two slide rails 31 are disposed on side surfaces of the trolley frame 141.

The preceding embodiments of this application are illustrative examples of this application and are not intended to limit implementations of this application. Those of ordinary skill in the art can make changes or variations in other different forms based on the preceding description. All embodiments do not need to be and cannot be exhausted herein. Any modifications, equivalent substitutions, and improvements made within the spirit and principle of this application fall within the scope of the claims of this application.

## Claims

1. A detection device for a knife clearance of a slitting knife, comprising:
a support unit (1), wherein a knife holder (700) of the slitting knife (900) is disposed on the support unit (1); and
a detection unit (3), connected to the support unit (1) and comprising a charge-coupled device (CCD) sensor assembly, wherein the CCD sensor assembly faces the slitting knife (900) and is configured to detect the knife clearance of the slitting knife (900).

2. The detection device for a knife clearance of a slitting knife according to claim 1, wherein a plurality of slitting knives (900) are disposed on a knife shaft (800) along a first direction, and the detection unit (3) is movably connected to the support unit (1) along the first direction so that the CCD sensor assembly is movable relative to the support unit (1) along the first direction.

3. The detection device for a knife clearance of a slitting knife according to claim 2, wherein the detection unit (3) further comprises a slide rail (31) and a slide block (32), the slide rail (31) is disposed on the support unit (1) and extends along the first direction, the slide block (32) is slidably fitted with the slide rail (31), and the CCD sensor assembly is connected to the slide block (32).

4. The detection device for a knife clearance of a slitting knife according to claim 3, wherein the detection unit (3) further comprises a clamping member (33), the clamping member (33) is connected to the slide block (32), and the clamping member (33) cooperates with the slide rail (31).

5. The detection device for a knife clearance of a slitting knife according to claim 3, wherein the CCD sensor assembly comprises a light-emitting-end sensor (34) and a light-receiving-end sensor (35) opposite to each other along a second direction, the detection unit (3) further comprises a bracket, the light-emitting-end sensor (34) and the light-receiving-end sensor (35) are movably connected to the bracket along a third direction, and the bracket is connected to the slide block (32).

6. The detection device for a knife clearance of a slitting knife according to claim 5, wherein the bracket comprises a first support plate (36) and two second support plates (37), the first support plate (36) extends along the second direction, the two second support plates (37) extend along the third direction, the first support plate (36) is connected to the slide block (32), the two second support plates (37) are movably connected to the first support plate (36) along the second direction, the light-emitting-end sensor (34) is movably connected to one of the two second support plates (37) along the third direction, and the light-receiving-end sensor (35) is movably connected to the other of the two second support plates (37) along the third direction.

7. The detection device for a knife clearance of a slitting knife according to any one of claims 1 to 6, wherein the support unit (1) comprises a support table (11) and a support wheel (12), the support table (11) is provided with an avoidance hole, the support wheel (12) is disposed at the avoidance hole, the support wheel (12) protrudes from a surface of the support table (11), the knife holder (700) is movable to a detection position on the support table (11), and a rolling direction of the support wheel (12) cooperates with a moving direction of the knife holder (700).

8. The detection device for a knife clearance of a slitting knife according to claim 7, wherein the support unit (1) further comprises at least one of the following:
a guide roller (13), wherein a rotary shaft of the guide roller (13) is connected to the support table (11), the guide roller (13) is in rollable contact with a side wall of the knife holder (700), and a rolling direction of the guide roller (13) cooperates with the moving direction of the knife holder (700); or
a stop block (15) protruding from the support table (11) and configured to stop the knife holder (700) from leaving the support table (11).

9. The detection device for a knife clearance of a slitting knife according to claim 8, wherein two sets of guide rollers (13) are provided, a plurality of guide rollers (13) in each set of the two sets of guide rollers (13) are sequentially arranged at intervals along the moving direction of the knife holder (700), and the two sets of guide rollers (13) are disposed on two sides of the knife holder (700) along the moving direction of the knife holder (700).

10. The detection device for a knife clearance of a slitting knife according to claim 7, wherein the support unit (1) further comprises a trolley (14), and the support table (11) is disposed on the trolley (14).
